Europäisches Patentamt

**European Patent Office**

Office européen des brevets

(19)

(11) Publication number: **0 261 708**
**B1**

# EUROPEAN PATENT SPECIFICATION

(45) Date of publication of the patent specification:
**12.12.90**

(21) Application number: **87201603.5**

(22) Date of filing: **25.08.87**

(51) Int. Cl.⁵: **B23P 19/00, E01B 29/24**

(54) Device to feed clips step-by-step for the automatic connection of rails to sleepers.

(30) Priority: **22.09.86 IT 8341086**

(43) Date of publication of application:
**30.03.88 Bulletin 88/13**

(45) Publication of the grant of the patent:
**12.12.90 Bulletin 90/50**

(84) Designated Contracting States:
**AT BE CH DE FR GB IT LI LU NL SE**

(56) References cited:
**EP-A- 0 143 477**
**DE-B- 2 032 462**
**GB-A- 2 091 674**
**GB-A- 2 148 156**
**NL-C- 75 916**
**US-A- 2 814 858**
**US-A- 3 103 023**

**IBM TECHNICAL DISCLOSURE BULLETIN, vol. 10,
no. 2, 2nd July 1967, page 148, New York US; G.F.
FERRIS et al.: "In-line substrate escapement"**

(73) Proprietor: **DANIELI & C. OFFICINE MECCANICHE
S.p.A., Via Nazionale, 19, I-33042 Buttrio (UD)(IT)**
Proprietor: **ITI/CLM IMPIANTI TECNICI INDUSTRIALI
SpA, Via Nazionale, 69, I-33042 Buttrio (UD)(IT)**

(72) Inventor: **Mancini, Flavio, Via Amba D'Oro 3,
I-25100 Brescia(IT)**

(74) Representative: **Petraz, Gilberto Luigi, G.L.P. S.a.S. di
Gilberto Petraz P.le Cavedalis 6/2, I-33100 Udine(IT)**

## Description

This invention concerns a device according to the preamble of claim 1 to feed clips step-by-step for the automatic connection of rails to sleepers. To be more exact, the invention tends to provide a device that positions and delivers the clips employed to fasten the rails to the sleepers.

Such clips often consist of a substantially U-shaped element having one wing shorter than the other and a central hole in the intermediate segment between the two wings or are of other like types.

Such a device is applied correctly to machines to bolt rails of the type described and claimed in EP 143477, EP 149278 and EP 153772 and in like and analogous machines.

Many problems are entailed in the bolting of rails with complex machines which provide at least for the positioning or prior positioning of the clip, the possible positioning or prior positioning of springs or washers and the tightening of the nuts.

A first problem consists of the fact that if for any reason the machine has not positioned or cannot position the clip, it is best that in any event the clip should be delivered to the neighbourhood of the relative bolt; the purpose of this is to enable the inspection gang which follows, to perform and complete the work which the machine has been unable to perform or complete.

Another problem is the need to locate the clip correctly in position in relation to the bolt or prepositioning means.

A third problem is the need to feed the clips step-by-step continuously.

It is also advantageous that the clips should be fed by their own weight so as to simplify and facilitate the transport, conveying and feeding operations.

EP 143477 discloses the generic idea of delivering the components with a machine to lay the rails.

US 2,814,858 discloses an assembly to intercept the clips, allow them to pass and clamp them when they are fed by a vibrating feeder.

US 3,103,023 discloses a resilient means to retain clips which is located at an end position and cooperates with the guiding back of a conduit that guides the clips; this retainer means is of a blade type.

NL 75.916 discloses a toothed wheel to control the feed of clips governed by an escapement actuated by the clips themselves.

UK 2,091,674 discloses a blocking star with an escapement governed by a small piston to control the passage of bottles.

UK 2,148,156 discloses a roller with gear dogs to control the feed of sheared clips.

For these and other reasons, which will become clear in the description hereinafter, the present applicant has studied, tested and embodied the device of this invention.

According to the invention the device can cooperate with the bolts, as in EP 143477, or can cooperate with a unit which prepares pre-positioned sets of components, as in EP 149278.

For mere simplicity of description we shall describe hereinafter the feeder device of this invention as applied in direct cooperation with bolts already positioned in relation to the rail, but it is obvious that the teaching of the device can be applied also to preparation of the sets of components to be fitted.

According to the invention the device serves to provide clips for the lefthand and righthand bolts of each rail and it is necessary to arrange only the correct orientation of the components.

Thus in the machines cited above there will be from one to four devices, depending on the number of bolts with which the machine can deal substantially at one and the same time.

The device comprises a chute along which the clips slide by gravity before being retained resiliently at the end of the chute.

Upstream of the resilient retaining means is a mechanism which lets the clips move forwards step-by-step and assists the discharge of the furthest forward clip.

The attached figures, which are given as a non-restrictive example, show the following: -

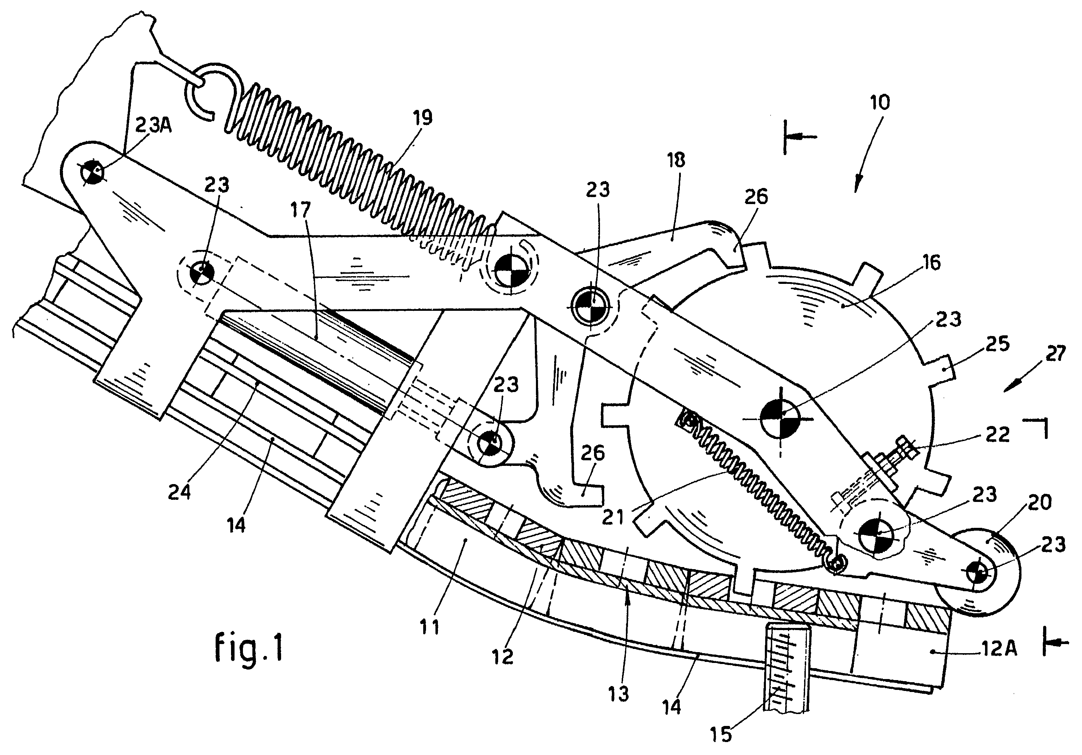

Fig.1 shows a side view of an embodiment of the invention;

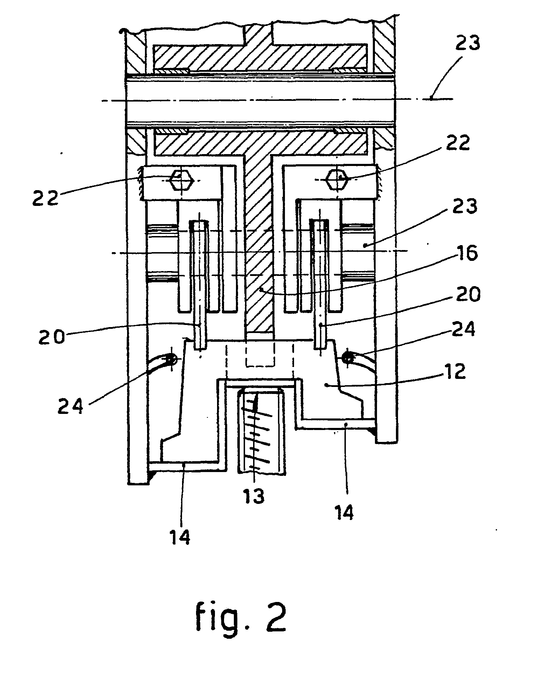

Fig.2 shows a front view of the embodiment of Fig.1.

In the figures the same parts or parts having the same functions, such as the rotation pivots, bear the same reference numbers.

Clips 12 slide by gravity along a chute 11, being supported below by lateral supports 14 and guided at their sides by lateral guides 24, which may be positioned as required.

A bolt 15 already positioned in an appropriate support at a side of a rail passes in an intermediate position between the side portions of the chute 11.

A pin or other positioning or prepositioning means may pass instead of the bolt 15.

The bolt 15 arrives in correspondence with the clip 12 positioned correctly at the front of the row of clips at 12A and during its advance enters into cooperation with a hole 13 in such clip 12.

It may be the bolt 15 or a substitute positioning means which moves in relation to the clips 12, or else the clips 12 with the chute 11 may move in relation to the bolt 15.

If there were no control means, the clips would all slide out of the chute 11.

So as to time and control the departure of the clips 12, the present applicant has provided a conditioner assemblage 27, which in the case shown as an example comprises a toothed wheel 16 and other means, as will be disclosed hereinafter.

The wheel 16 includes control teeth 25, which have a pitch corresponding to the distance between two holes 13 in two neighbouring clips 12.

The toothed wheel 16 is an idler wheel and, if it were free to rotate, with the clips 12 sliding along the chute 11 all the holes 13 of the clips 12 would cooperate with the control teeth 25.

To prevent indiscriminate sliding, the toothed wheel 16 is conditioned by an escapement 18 actuated by a jack 17. At each actuation, whether forward or backward, performed by the jack 17 the escapement 18 frees a tooth 25 of the wheel engaged with a respective abutting tooth 26 of the escapement and positions another abutting escapement tooth 26 so as to halt the next tooth 25 of the wheel. The outcome of this action is that the wheel 16 is rotated by a pre-set value, at each actuation performed by the jack 17, owing to the thrust action of the clips 12. Such rotation is equal advantageously to half of the pitch between two holes 13 of two neighbouring clips 12.

As we said above, the rotation of the wheel 16 is determined by the thrust of the clips 12 and therefore all the clips too move forward by a coordinated value.

When the bolt 15, cooperating with the hole 13 in the furthest forward clip 12 at 12A, removes the clip from 12A, a sensor or another suitable means gives warning that another clip 12 has to be positioned at 12A. Such sensor, which is not shown here, actuates the jack 17, which is thus actuated twice, so that another clip 12 can be moved to 12A, since the clip 12 moves forward by half of the pitch at each actuation.

The double actuation enables the clip to be positioned at 12A on the second actuation, and if the clip 12 has not been engaged by the bolt 15, it is expelled on the first successive actuation in the neighbourhood of the bolt 15 which should have engaged it.

Even if the sensor indicates that the operation of engagement of the clip at 12A has been carried out by the bolt 15 whereas in actual fact such operation has not been performed for some reason, the double actuation performed by the jack 17 enables a new clip 12 to move to 12A, while the previous clip 12 a t 12A is discharged in the neighbourhood of the bolt 15.

To prevent the clip 12 at 12A leaving its position owing to its own momentum even if it has not been urged by the bolt 15 or by the double actuation of the jack 17, resilient wheels 20 have been provided which cooperate with the clips located at 12A.

Other means equivalent to the resilient wheels as regards their purposes and functions, such as slide blocks or other means, may be fitted instead of such wheels 20.

The resilient wheels 20 are actuated by a pressure spring 21 and each of them is positioned by a limiting device 22.

To improve the engagement of the bolt 15 in the hole 13, the chute 11 can oscillate on a pivot 23A and the bolt 15 cooperates advantageously with the chute 11 at 12A upstream of the hole 13; the outcome thereof is that the cute 11 presses on the bolt 15 and guides and positions it exactly against the hole 13.

As we said above, to avoid any violent action, the chute 11 is embodied with its terminal portion able to oscillate in a vertical plane and is pivoted at 23A and supported resiliently by a return spring 19, so that only a part of its weight weighs resiliently on the bolt 15. Such return spring 19 may comprise means to adjust tension.

## Claims

1 - Device to feed clips step-by-step for the automatic connection of rails to sleepers, which is suitable to be fitted to machines or units delivering connecting and clamping components and/or to machines which screw the rails to the sleepers, and is able to deliver the clips (12) directly to previously installed bolts (15) located at the sides of the rails, or to means which carry out prior installation of the bolts, or to means which position beforehand the connecting and clamping components, a chute (11) being provided along which such clips (12) slide by gravity, the device comprising a conditioner assemblage (27) that intercepts the clips (12), allows them to pass and clamps them, the device being characterized in that the chute (11) is upheld resiliently (19) and the conditioner assemblage comprises at an end position (12A) resiliently governed wheels (20) which cooperate with the back of the clip (12) in retaining momentarily the clip (12), and also comprises a toothed wheel (16) to control the feed of the clips (12) and to expel the same (12) when they do not hook themselves onto a bolt (15).

2 - Device as claimed in Claim 1, in which the toothed wheel of the conditioner assemblage (27) comprises control teeth (25), the pitch of such control teeth (25) being coordinated with the distance between the holes (13) in two free, supported, neighbouring clips (12).

3 - Device as claimed in any claim hereinbefore, in which the toothed wheel (16) is conditioned by an escapement (18) having two abutment teeth (26) able to cooperate with the control teeth (25) of the wheel and actuated by a jack (17).

4 - Device as claimed in any claim hereinbefore, in which the escapement (18) acts at half of the pitch of the control teeth (25).

5 - Device as claimed in any claim hereinbefore, in which the resilient means consist of resilient wheels (20) governed by pressure springs and position limiting means (22).

6 - Device as claimed in any claim hereinbefore, in which the resilient means consist of slide blocks.

7 - Device as claimed in any claim hereinbefore, in which the chute (11) guides and conditions the bolt (15) up to the neighbourhood of the hold (13).

## Patentansprüche

1. Vorrichtung zum schrittweise Zuführen von Klemmen zum automatischen Verbinden von Schienen mit Schwellen, welche geeignet ist, an Maschinen oder Einheiten angebracht zu werden, die Verbindungs- und Klemmteile liefern und/oder an Maschinen, welche die Schienen mit den Schwellen zusammenschrauben, und welche die Klemmen (12) unmittelbar zu den vorangehend befestigten, an den Seiten der Schienen gelegenen Bolzen (15) oder zu Mitteln, die eine vorausgehende Befestigung der Bolzen durchführen oder zu Mitteln, welche die Verbindungs- und Klemmteile im voraus anbringen liefern kann, wobei eine Rutsche (11) vorgesehen ist, entlang der solche Klemmen (12) durch die Schwere gleiten, die Vorrichtung eine Konditionier-Montageeinheit (27) aufweist, welche die Klemmen (12) auffängt, sie weiterbewegt und festklemmt, wobei die Vorrichtung dadurch gekennzeichnet ist, daß die Rutsche (11) federnd (19) hochgehalten wird und die Konditionier-Montageeinheit an einer Endlage (12A) federnd geführte Räder (20) aufweist, die mit der Rückseite der Klemme (12) durch vorübergehendes Zurückhalten der Klemme (12) zusammenwirken und auch ein Zahnrad (16) zum Steuern der Zuführung der Klemmen (12) und zu ihrem (12) Ausstoßen aufweist, wenn sie sich nicht an einem Bolzen (15) einhaken.

2. Vorrichtung nach Anspruch 1, bei welcher das Zahnrad der Konditionier-Montageeinheit (27) Steuerzähne (25) aufweist, wobei die Teilung solcher Steuerzähne (25) mit dem Abstand zwischen den Öffnungen (13) in zwei freien, getragenen, benachbarten Klemmen (12) abgestimmt ist.

3. Vorrichtung nach irgendeinem vorangehenden Anspruch, bei welcher das Zahnrad (16) durch eine Hemmung (18) mit zwei Anstoßzähnen (26), die mit den Steuerzähnen (25) des Rades zusammenwirken können, gesteuert und durch einen hydraulischen Zylinder (17) betätigt wird.

4. Vorrichtung nach irgendeinem vorangehenden Anspruch, bei welcher die Hemmung (18) an der Hälfte der Teilung der Steuerzähne (25) wirkt.

5. Vorrichtung nach irgendeinem vorangehenden Anspruch, bei welcher die federnden Mittel aus federnden, durch Druckfedern und Lagebegrenzungsmittel (22) geführten Rädern (20) bestehen.

6. Vorrichtung nach irgendeinem vorangehenden Anspruch, bei welcher die federnden Mittel aus Gleitblöcken bestehen.

7. Vorrichtung nach irgendeinem vorangehenden Anspruch, bei welcher die Rutsche (11) den Bolzen (15) bis zu der Umgebung der Öffnung (13) führt und vorbereitet.

**Revendications**

1. Appareil d'alimentation pas-à-pas de rondelles pour la fixation automatique des rails aux traverses, convenant pour un montage sur des machines ou unités destinées à distribuer des composantes de raccordement ou de fixation et/ou sur des machines destinées à visser les rails aux traverses, et permettant de distribuer les rondelles (12) directement au niveau des boulons (15) préalablement installés sur les côtés des rails, au niveau des instruments qui réalisent une pré-installation des boulons, ou au niveau des instruments qui positionnent préalablement les composantes de raccordement et de fixation, une goulotte (11) étant prévue le long de laquelle les rondelles (12) glissent par gravité, l'appareil se composant d'un mécanisme de conditionnement (27) qui intercepte les rondelles (12), leur permet de passer et fixe celles-ci, l'appareil étant caractérisé en ce que la goulotte (11) est soutenue de manière résiliente (19) et en ce que le mécanisme de conditionnement se compose d'une part, à une extrémité (12A), de roues commandées par résilience (20) qui coopèrent avec le dos de la rondelle (12) pour retenir momentanément la rondelle (12), et d'autre part d'une roue dentée (16) permettant de contrôler l'alimentation des rondelles (12) et d'expulser ces dernières (12) lorsqu'elles ne s'accrochent pas sur un boulon (15).

2. Appareil selon la Revendication 1, dans lequel la roue dentée du mécanisme de conditionnement (27) comporte des dents de contrôle (25), le pas de ces dents de contrôle (25) étant coordonné avec la distance entre les perforations (13) de deux rondelles libres, soutenues et voisines (12).

3. Appareil selon l'une quelconque des revendications précédentes, dans lequel la roue dentée (16) dépend d'un échappement (18) présentant deux dents de butée (26) capables de coopérer avec les dents de contrôle (25) de la roue et commandées par un vérin (17).

4. Appareil selon l'une quelconque des revendications précédentes, dans lequel l'échappement (18) agit à la moitié du pas des dents de contrôle (25).

5. Appareil selon l'une quelconque des revendications précédentes, dans lequel les instruments résilients se composent de roues résilientes (20), commandées par des ressorts de pression et par des instruments permettant de limiter la position (22).

6. Appareil selon l'une quelconque des revendications précédentes, dans lequel les instruments résilients consistent en coulisseaux.

7. Appareil selon l'une quelconque des revendications précédentes, das lequel la goulotte (11) guide et conditionne le boulon (15) jusqu'à proximité de la perforation (13).

fig.1

fig. 2